# FASCICULE DE BREVET EUROPEEN

(11) **EP 3 352 920 B1**
(45) Date de publication et mention de la délivrance du brevet: **09.11.2022**
(21) Numéro de dépôt: 16809898.6
(22) Date de dépôt: 21.09.2016
(51) Int. Cl.: B09B 3/00, A62D 3/36, C22B 3/06, C22B 7/00, C04B 14/40, C04B 18/04, A62D 101/41, C01B 33/12, C01B 33/20, C22B 1/00, C01B 39/00

(54) **PROCÉDÉ ET DISPOSITIF DE NEUTRALISATION ET VALORISATION DE DÉCHETS D'AMIANTE**
VERFAHREN UND VORRICHTUNG FÜR NEUTRALISIERUNG UND RECYCLING VON ASBESTABFÄLLEN
METHOD AND DEVICE FOR NEUTRALIZING AND RECYCLING ASBESTOS WASTE

(30) Priorité: 22.09.2015 WO PCT/FR2015/052542; 21.03.2016 FR 1652383
(43) Date de publication de la demande: 01.08.2018
(73) Titulaire: BlackAsbestos Ltd, Valetta VLT 1171 (MT)
(72) Inventeur: POGGI, Paul, 20250 Corte (FR)
(74) Mandataire: Cornuejols, Georges
(86) Numéro de dépôt international: PCT/FR2016/052390
(87) Numéro de publication internationale: WO 2017/051117

(56) Documents cités:
- EP-A1- 0 546 984
- WO-A1-88/10234
- WO-A1-95/12463
- WO-A1-2008/093368
- WO-A2-2009/141566
- US-A- 5 258 562

## Description

### DOMAINE TECHNIQUE DE L'INVENTION

La présente invention vise un procédé et un dispositif de neutralisation et de valorisation des déchets d'amiante. La présente invention s'applique notamment à la neutralisation, au recyclage et à la valorisation des déchets d'amiante.

Plus particulièrement, elle s'applique à des déchets d'amiante quelles que soient leurs provenances notamment ceux issus des chantiers de désamiantage dans du Bâtiment et des Travaux Publics (d'acronyme BTP) ou de la déconstruction navale.

### ETAT DE LA TECHNIQUE

L'amiante n'est pas un minéral en soi. C'est un terme générique qui désigne un groupe de roches naturelles métamorphiques, de morphologie fibreuse. Le terme « amiante » a été adopté à des fins d'identification commerciale.

L'amiante regroupe deux grandes familles :
- les serpentines, ne comportant qu'une seule variété, le chrysotile, et
- les amphiboles, qui se décomposent en cinq variétés, l'amosite, la crocidolite, l'actinolite, l'anthrophyllite et la trémolite.

Trois variétés ont été largement commercialisées :
- le chrysotile (aussi dénommé amiante blanc), de formule chimique Mg₃Si₂O₅(OH)₄,
- la crocidolite (aussi dénommée amiante bleu), de formule chimique Na₂(Mg,Fe)₃Al₂Si₈O₂₂(OH)₂ et
- l'amosite (aussi dénommée amiante brun), de formule chimique (Mg,Fe)₇Si₈O₂₂(OH)₂

La variété chrysotile représente plus de quatre-vingt-quinze pourcents de l'amiante produit et consommé entre 1900 et 2003.

L'amiante est un matériau qui possède plusieurs avantages :
- des propriétés physico-chimiques intéressantes, telles que la résistance thermique, mécanique et chimique,
- un faible prix de vente du fait d'un coût de production faible.

C'est pourquoi il a été utilisé dans la fabrication de plus de trois mille produits, notamment dans les matériaux de construction. On le trouve notamment dans :
- les flocages,
- les faux plafonds,
- les revêtements de sol,
- les calorifugeages,
- les cartons,
- les joints,
- les revêtements de murs et plafonds,
- les toitures et façades et
- les conduites d'eau et de ventilation.

On distingue trois grands types de déchets contenant de l'amiante :
- les déchets d'amiante libres, qui proviennent des flocages, calorifugeages, matériels et équipements des opérateurs (sacs, outils et accessoires...) dont les fibres peuvent se libérer facilement dans l'atmosphère,
- les déchets d'amiante lié à des matériaux inertes (amiante-ciment), qui ne sont pas susceptibles de libérer des fibres,
- les déchets d'amiante lié à des matériaux non inertes (dalles, vinyle...).

L'amiante libère, en se désagrégeant, des fibres microscopiques qui restent en suspension dans l'air et qui, lorsqu'elles sont inhalées, peuvent atteindre les alvéoles pulmonaires.

Les travaux réalisés sur l'amiante ont montré que des risques liés à l'emploi de ce matériau existent surtout lorsque l'amiante se présente sous la forme de particules inhalables, notamment sous la forme de fibres aciculaires libres, l'inhalation de particules de ce type étant susceptible d'induire des formations fibreuses ou cancéreuses notamment dans le corps humain, pouvant se traduire par l'apparition de maladies de type cancer du poumon ou asbestose. Les pathologies de ce type ont été attribuées à la forme aciculaire des fibres d'amiantes mais également à un effet des ions libérés après dissolution partielle de l'amiante au niveau des tissus vivants.

Cela peut conduire à l'apparition de plusieurs maladies :
- l'asbestose, maladie pulmonaire analogue à la silicose des mineurs, des lésions bénignes de la plèvre,
- le cancer du poumon (risques accrus s'il y a association avec le tabac) et
- les mésothéliomes, cancers rares mais graves de la plèvre et du péritoine.

Compte tenu de ces risques, les déchets contenant de l'amiante sont considérés comme des déchets industriels dangereux, et on a cherché durant ces dernières années à développer des techniques permettant de les confiner ou de les éliminer efficacement. A ce sujet, on note la présence en France de nombreux déchets d'amiante libre ou lié essentiellement du flocage, calorifugeage et de l'amiante-ciment issus par exemple des chantiers du bâtiment et des travaux publics. L'utilisation d'amiante a été largement répandue jusqu'à l'interdiction en 1997 de la fabrication et de l'exploitation des produits contenant des fibres d'amiante.

Un diagnostic de la présence d'amiante est imposé par la loi pour tous les travaux soumis à autorisation de démolition ou de transformation d'immeubles construits avant le premier janvier 1991. Les matériaux de construction contenant de l'amiante sont enlevés et éliminés dans les règles de l'art.

Deux filières d'élimination de déchets d'amiante sont connues à ce jour : l'enfouissement et la vitrification.

La première solution adoptée pour la gestion des déchets contenant de l'amiante est celle consistant à stocker les déchets d'amiante majoritairement dans des Installations de Stockage de Déchets Dangereux (d'acronyme ISDD). Ce mode de confinement est une solution peu satisfaisante, notamment dans la mesure où elle n'implique aucun traitement capable de rendre les déchets inoffensifs et qu'elle conduit de ce fait à une accumulation de déchets dangereux sur des sites sensibles. On compte, en France, treize Installations de Stockage de Déchets Dangereux, leur capacité de stockage n'étant pas illimitée, ces installations arrivent toutes presque à saturation, et elles engendrent en outre un coût non négligeable. Par ailleurs, la responsabilité du producteur du déchet reste toujours engagée tant que l'amiante existe, donc à vie.

Le coût de la mise en ISSD est relativement important et variable, d'environ six cent cinquante euros à mille deux cent euros par tonne, hors transport des déchets et hors taxe générale sur les activités polluantes.

Une autre solution mise en œuvre aujourd'hui consiste à réaliser une vitrification des déchets à base d'amiante en portant ces déchets à très haute température en employant typiquement une torche à plasma. Une telle technique s'avère certes efficace, car elle conduit à une conversion de tout type d'amiante en un matériau vitrifié non susceptible de libérer des fibres inhalables d'amiante aciculaire. Néanmoins, un inconvénient majeur de cette méthode de traitement est son coût très élevé, dû à la consommation énergétique très importante liée à l'emploi de la torche à plasma ainsi qu'au coût de mise en place et de maintenance des dispositifs de haute technologie qu'elle implique. Le coût de mise en oeuvre du procédé de vitrification est de l'ordre de mille trois cent cinquante euros à trois mille euros par tonne, hors transport et hors taxes.

De plus, une seule installation de ce type existe en Europe avec une capacité de traitement relativement réduite égale à 22 tonnes par jour (soit 8000 tonnes par an), ce qui représente une très faible quantité en comparaison aux quantités très élevées de déchets d'amiante qui sont à traiter aujourd'hui. A titre indicatif, en France, la quantité annuelle de déchets contenant de l'amiante est de l'ordre de cinq cent mille tonnes d'amiante libre de type flocage et vingt-deux millions de tonnes d'amiante-ciment. Aujourd'hui, environ 100 millions de m² des bâtiments français sont encore amiantés. D'autres solutions que l'enfouissement et la vitrification ont été envisagées pour traiter des déchets d'amiante, qui se sont toutefois révélées inapplicables en industrie, ou moins efficaces que la vitrification.

Ainsi, il a par exemple été proposé de détruire mécaniquement la structure aciculaire des fibres d'amiante en les soumettant à un broyage intensif visant à induire une amorphisation de la structure amiante.

D'autre part, il a été proposé de réaliser une attaque acide des déchets d'amiante dans le but de solubiliser ses fibres aciculaires. Dans ce cadre, une méthode radicale consiste à attaquer l'amiante par l'acide fluorhydrique concentré. Certes, cette attaque se révèle très efficace, mais elle n'est envisageable qu'à l'échelle du laboratoire. En effet, la toxicité et les risques liés à l'emploi de l'acide fluorhydrique interdisent sa mise en oeuvre industrielle, n'offrant par ailleurs aucune solution remarquable de valorisation des déchets.

L'emploi d'autres acides que l'acide fluorhydrique précité a été proposé, mais une attaque par ces autres acides s'avère généralement inefficace pour traiter la plupart des déchets d'amiante. Ainsi, par exemple, il est décrit dans le document WO 97/27902 un traitement de dissolution de l'amiante par de l'acide chlorhydrique additionné d'ions potassium et éventuellement d'autres acides, à des températures de l'ordre de trente et quatre-vingt-quinze degrés Celsius. Le procédé décrit dans ce document peut certes s'avérer efficace avec certains types d'amiantes, notamment les amiantes de type chrysotile, mais il s'avère le plus souvent inadapté pour le traitement des amiantes de type amphiboles, notamment les cummingtonites, (les amosites spécialement) et les crocidolites, et ce tout particulièrement lorsqu'il s'agit d'amiantes floqués. De nombreuses publications établissent en fait que l'attaque acide de l'amiante reste en règle générale très limitée à la surface des fibres aciculaires de l'amiante, en particulier lorsqu'il s'agit d'amiante de type amphibole. Ce qui semble s'expliquer par la compacité de la structure dense et la formation d'un gel de surface qui empêcherait l'attaque du cœur des fibres d'amiante. Pour plus de détails à ce sujet, on pourra notamment se reporter à l'article "Dissolution of fibrous silicates in acid and buffered salt solutions", Allen MP. et Smith R.W., Minerais Engineering, vol.7, 1527-1537 (1994).

D'autres solutions envisagent un procédé de traitement d'un déchet contenant de l'amiante en faisant réagir ce déchet avec un acide autre que l'acide fluorhydrique à une température d'au moins cent vingt-cinq degrés Celsius et à une pression supérieure à 0,2 MPa (c'est-à-dire à une pression d'au moins deux bar), et dans lequel :
- l'amiante comprise dans le déchet traité est une amiante de type amphibole ;
- la solution obtenue à l'issue de la lixiviation des déchets d'amiante par l'acide est valorisée.
- la solution obtenue à l'issue de la lixiviation des déchets d'amiante par l'acide est valorisée.

On connaît le document WO 95/12463, qui décrit un appareil pour convertir l'amiante en une matière non dangereuse comprenant un réservoir de conversion en acier inoxydable dans lequel est disposé un mélangeur à haut cisaillement, un système de filtration et un réservoir de régénération. La complexité de ce système, notamment du fait de la présence du mélangeur à haut cisaillement rend son exploitation onéreuse et peu fiable.

On connaît le document WO2009/141566, qui décrit un procédé de traitement de déchets industriels contenant de l'amiante et un liant hydraulique, qui comprend au moins une étape de traitement dite acide froid des déchets industriels avec une solution aqueuse d'acide chlorhydrique à température ambiante, adapté de manière à former un solide dit amiante contenant l'amiante des déchets industriels. On connaît aussi le document US 5 258 562, qui décrit un procédé de traitement d'un matériau contenant de l'amiante pour éliminer ce matériau d'un substrat où il est installé et pour détruire l'amiante dans ce matériau, comprenant le mouillage du matériau avec une solution aqueuse contenant environ 1 à 25% en poids d'un acide organique faible, tel que l'acide trifluoroacétique. Ces procédés sont particulièrement lents et ne permettent donc pas une exploitation industrielle.

### OBJET DE L'INVENTION

La présente invention vise à remédier à tout ou partie de ces inconvénients.

A cet effet, selon un premier aspect, la présente invention vise un dispositif de neutralisation des déchets d'amiante selon la revendication 1.

Grâce à ces dispositions, la performance de neutralisation de l'acide contenu dans la cuve, est maintenue pour chacun des cycles successifs de neutralisation des déchets dans cette cuve. De plus, le maintien à une température prédéfinie de la cuve contenant la solution acide est facilité et nécessite un apport calorifique correspondant au chauffage complémentaire de la solution acide régénérée pour atteindre la température utile. Enfin, les solides inertes issus des déchets neutralisés sont récupérés et valorisés pour une réutilisation en industrie.

Le dispositif objet de la présente invention comporte des moyens de détermination d'un type et/ou d'une proportion d'amiante dans les déchets avant immersion dans la cuve, l'unité de régénération ajustant le potentiel hydrogène de la solution acide régénérée en fonction du type et/ou de la proportion d'amiante.

Ça permet d'adapter la quantité d'acide nécessaire à ajouter dans la solution acide à régénérer.

Dans des modes de réalisation, le dispositif objet de la présente invention comporte des moyens de traitement des déchets neutralisés transformés en solides inertes en fonction de la proportion d'amiante déterminée.

L'avantage de ces modes de réalisation est d'utiliser les propriétés des déchets neutralisés de façon optimisée, en fonction du type et de la proportion d'amiante contenu dans les déchets, dans le but de créer de nouvelles matières premières, réutilisables en industrie tels des additifs pour ciment, par exemple.

Dans des modes de réalisation, le dispositif objet de la présente invention comporte un poste de broyage de déchets d'amiante, avant immersion dans la cuve d'acide, réduisant la taille des déchets à des dimensions comprises entre un dixième de millimètres et un millimètre.

Ces modes de réalisation permettent d'accélérer la vitesse de neutralisation des déchets d'amiante et donc d'optimiser le dispositif objet de la présente invention.

En outre, le dispositif objet de la présente invention comporte un capteur d'usure de la solution acide de neutralisation les déchets d'amiante, et une unité de précipitation sélective, en fonction de l'usure captée, de la phase liquide de la solution acide, alimentée par l'unité de régénération.

Grâce à ces dispositions, une fois que la performance de neutralisation de la solution acide régénérée atteint son seuil, cette solution est traitée et mise à pH neutre, et les principaux éléments qu'elle contient sont extraits pour être valorisé. Ainsi les risques de corrosion et de dangers pour l'opérateur sont écartés.

Dans des modes de réalisation, le capteur d'usure est une sonde sous forme d'électrode ionique spécifique (capteur d'activité ionique).

Ces modes de réalisation présentent l'avantage de pouvoir suivre l'avancement de la réaction dans la cuve en temps réel.

Dans des modes de réalisation, l'unité de filtration comporte un filtre de porosité inférieure à 0,5 µm.

Dans des modes de réalisation, le dispositif objet de la présente invention comporte un circuit fermé extérieur relié à la cuve, disposant de moyens de refroidissement des vapeurs en sortie de cuve.

Ces modes de réalisation permettent de liquéfier les vapeurs dégagés dans de la cuve pour limiter les rejets d'effluents gazeux. Le volume d'acide est conservé.

Dans des modes de réalisation, le dispositif objet de la présente invention comporte des moyens d'humidification des déchets avant immersion dans la cuve d'acide dilué.

De telles dispositions permettent d'empêcher la volatilité des fibres d'amiante.

Dans des modes de réalisation, le dispositif objet de la présente invention comporte des moyens de dessalement d'eau avant dilution de l'acide dans la cuve par l'eau dessalée.

Ces modes de réalisation permettent, dans le cas de dispositifs mobiles, d'éviter d'avoir un stock d'eau dessalée limité.

Dans des modes de réalisation, le dispositif objet de la présente invention comporte une unité de lavage et de séchage des déchets neutralisés transformés en solides inertes.

Grâce à ces dispositions, les solides inertes ne comportent plus de traces d'acide est ne sont donc pas dangereux pour un utilisateur.

Dans des modes de réalisation, le dispositif objet de la présente invention comporte des moyens de récupération de l'eau de lavage pour préparation de la solution acide.

Ces modes de réalisation permettent d'économiser l'eau utilisée dans le dispositif et de revaloriser l'eau utilisée pour le lavage.

Dans des modes de réalisation, la cuve comporte au moins un système d'agitation.

L'avantage de ces modes de réalisation est d'homogénéiser le mélange réactionnel dans la cuve.

Dans des modes de réalisation, le dispositif objet de la présente invention comporte des moyens de chauffage de la solution acide par micro-ondes.

Ces modes de réalisation permettent de chauffer rapidement et à moindre coût la solution d'acide.

Dans des modes de réalisation, le dispositif objet de la présente invention comporte une unité de tri des déchets d'amiante confinée comportant :
- une vitre munie de boîtes à gants et
- un convoyeur pour transporter les déchets d'amiante derrière la vitre.

Ces modes de réalisation permettent un tri des déchets d'amiante sans nécessiter d'équipements de protection individuelle pour les opérateurs. Ces modes de réalisation permettent ainsi une économie sur le budget alloué à la protection du personnel.

Selon un deuxième aspect, la présente invention vise un procédé de neutralisation des déchets d'amiante selon la revendication 14.

Les avantages, buts et caractéristiques particulières du procédé objet de la présente invention étant similaires à ceux du dispositif objet de la présente invention, ils ne sont pas rappelés ici.

Le procédé objet de la présente invention comporte une étape de mesure de l'usure de la solution acide ; selon un mode de réalisation , dans ladite étape la solution acide est régénérée tant que l'usure mesurée est inférieure à une valeur limite prédéterminée et, lorsque l'usure mesurée est supérieure à la valeur limite prédéterminée, une étape d'extraction des sous-produits de la phase liquide par précipitation sélective de la solution acide.

### BREVE DESCRIPTION DES FIGURES

D'autres avantages, buts et caractéristiques particulières de l'invention ressortiront de la description non limitative qui suit d'au moins un mode de réalisation particulier du dispositif et du procédé objets de la présente invention, en regard des dessins annexés, dans lesquels :
- la figure 1 représente, schématiquement, un mode de réalisation particulier d'un dispositif objet de la présente invention,
- la figure 2 représente, schématiquement, un cycle d'une solution d'acide d'un dispositif objet de la présente invention,
- la figure 3 représente, sous forme de schéma fonctionnel, le procédé objet de la présente invention,
- la figure 4 représente, sous forme de schéma opérationnel, un premier mode de réalisation d'une unité fixe de neutralisation et valorisation des déchets d'amiante,
- la figure 5 représente, en vue de dessus, un premier mode de réalisation d'une unité mobile de neutralisation et valorisation correspondant au mode d'équipement de plateau camion,
- la figure 6 représente, en vue de côté, un deuxième mode de réalisation d'unité mobile maritime de neutralisation et valorisation des déchets d'amiante objet de la présente invention,
- la figure 7 est une vue en perspective d'un troisième mode de réalisation d'une unité mobile terrestre de neutralisation et valorisation des déchets d'amiante,
- la figure 8 est une première vue en perspective d'un camion quatrième mode de réalisation d'une unité mobile de neutralisation et valorisation des déchets d'amiante,
- la figure 9 est une deuxième vue en perspective du camion illustré en figure 8 et
- la figure 10 représente, en vue schématique de dessus, un mode de réalisation particulier d'une unité fixe de neutralisation et valorisation de déchets d'amiante.

### DESCRIPTION D'EXEMPLES DE REALISATION DE L'INVENTION

La présente description est donnée à titre non limitatif, chaque caractéristique d'un mode de réalisation pouvant être combinée à toute autre caractéristique de tout autre mode de réalisation de manière avantageuse. Par ailleurs, chaque paramètre d'un exemple de réalisation peut être mis en oeuvre indépendamment d'autres paramètres dudit exemple de réalisation.

On note dès à présent que les figures ne sont pas à l'échelle.

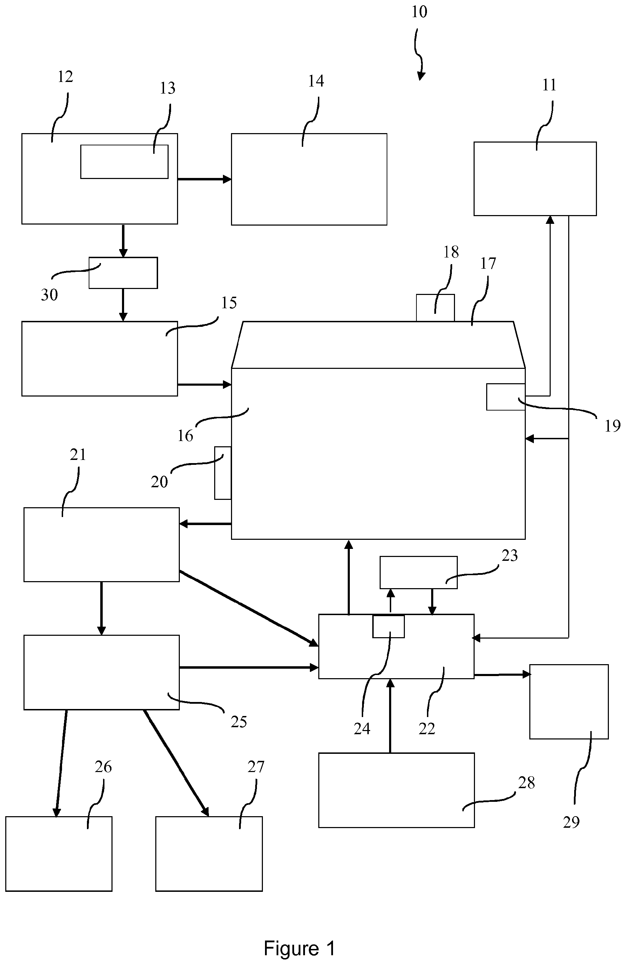

On observe, sur la figure 1, qui n'est pas à l'échelle, une vue schématique d'un mode de réalisation du dispositif de neutralisation des déchets d'amiante 10 objet de la présente invention. Sur la figure 1, les flèches en traits gras représentent des flux de matière et les flèches en traits fins représentent des flux de données.

Le dispositif 10 comporte un réservoir d'acide 23. L'acide contenu dans le réservoir est préférentiellement l'acide sulfurique de formule chimique H₂SO₄.

Le dispositif 10 comporte une cuve ou réacteur 16 contenant une solution d'acide dilué, dans laquelle sont plongés des déchets comportant de l'amiante, qui neutralise l'amiante. Préférentiellement, la solution d'acide dilué est une solution d'acide sulfurique dilué avec de l'eau.

La cuve 16 comporte des moyens de chauffage 20 de la solution acide. Préférentiellement, les moyens de chauffage 20 de la solution acide sont des moyens de chauffage par énergie électrique ou par micro-ondes. Dans des modes de réalisation, les moyens de chauffage sont disposés sur des conduits d'alimentation de la cuve 16 en acide et en eau. Dans des modes de réalisation, les moyens de chauffage 20 comportent un chauffage par énergie électrique, par micro-ondes ou par une chaudière et des serpentins de circulation de liquide caloporteur entourant la cuve 16.

La solution acide dans la cuve 16 est chauffée à une température proche de la température d'ébullition de la solution acide. Préférentiellement, la température de la solution acide dans la cuve 16 est inférieure à 104 °C. Dans des modes de réalisation la température de la solution acide dans la cuve 16 est comprise entre 80 °C et 100 °C.

La cuve 16 possède des parois adiabatiques, freinant la déperdition de chaleur. Au-dessus de la cuve 16 se trouvent des moyens de refroidissement 17. La température de la solution acide contenue dans la cuve étant proche de sa température d'ébullition, les moyens de refroidissement 17 permettent de condenser l'acide évaporé. Une fois liquéfiées, les vapeurs d'acide retournent dans la cuve 16. On obtient ainsi une conservation de la masse de la solution acide et une limitation des rejets de vapeurs nocives.

Préférentiellement, les moyens de refroidissement 17 comportent une colonne réfrigérante munie de serpentins métalliques traversés par un liquide caloporteur froid, par exemple de l'eau. Les moyens de refroidissement 17 se terminent par une cheminée 18 destine à maintenir la pression de l'atmosphère à l'intérieur de la cuve 16 égale à la pression atmosphérique. La cheminée 18 est munie d'un filtre, par exemple filtre à charbon pour capter les éventuels rejets gazeux.

Préférentiellement, la cuve 16 comporte au moins un système d'agitation. Le système d'agitation peut être un dispositif comportant une tige munie des pales mobiles centrée dans la cuve 16 fixe, par exemple. Ou, un dispositif comportant une tige munie des pales fixe centrée dans la cuve 16 mobile.

Le dispositif 10 comporte une unité de filtration 21 pour séparer la phase liquide de la solution acide après neutralisation des déchets d'amiante, d'une part, et des déchets neutralisés solides, c'est-à-dire des solides inertes résultant de la neutralisation, d'autre part.

L'unité de filtration 21 est reliée à la cuve d'acide 16. Une fois la réaction de neutralisation terminée dans la cuve 16, la solution acide est transférée, par exemple par l'intermédiaire d'une vanne en fond de cuve ou une pompe d'aspiration (non représentée) à l'unité de filtration 21. Préférentiellement, l'unité de filtration 21 comporte un filtre de porosité comprise entre 0,4 et 0,5 µm, préférentiellement 0,45 µm. Ce filtre possède une membrane (tamis) résistante à l'acide notamment l'acide sulfurique, par exemple une membrane en Polypropylène (PP) ou en Polytétrafluoroéthylène (PTFE, connu sous le nom Téflon).

Le dispositif 10 comporte une unité de régénération 22 de la solution acide, qui ajuste le potentiel Hydrogène de la phase liquide extraite, par ajout d'acide contenu dans le réservoir d'acide 23.

Préférentiellement, l'unité de régénération 22 comporte un pH-mètre 24. Le pH-mètre 24 mesure le potentiel Hydrogène de la solution acide pendant la régénération dans l'unité de régénération et déclenche ou arrête l'ajout de l'acide. Par exemple, le réservoir 23 peut comporter une vanne comportant des moyens d'activation en fonction de la valeur détectée par le pH-mètre 24. La vanne peut être activée tant que la valeur mesurée par le pH-mètre 24 est supérieure à une valeur limite prédéterminée. La valeur limite prédéterminée est préférentiellement comprise entre zéro et un.

La proportion d'amiante dans les déchets triés est déterminée en laboratoire par analyse MET (Microscope Electronique à Transmission). On estime ainsi les proportions des éléments chimiques constitutifs de la variété d'amiante présente dans les déchets à traiter. L'unité de régénération 22 ajuste la concentration et le potentiel hydrogène de la solution acide régénérée en fonction de la proportion d'amiante ainsi déterminée. Ainsi, en fonction de la proportion d'amiante déterminée, la quantité d'acide concentré pour la régénération de la solution acide peut être modifiée.

Bien entendu, un facteur de sécurité est pris en compte pour assurer que l'intégralité de l'amiante est neutralisée.

Le dispositif 10 comporte des moyens de transfert de la solution acide régénérée dans la cuve 16. Les moyens de transfert de la solution acide régénérée comportent une pompe d'aspiration, par exemple.

Les déchets neutralisés, une fois filtrés dans les moyens de filtration 21, sont lavés et séchés dans une unité de lavage et de séchage 25 des solides inertes. Le dispositif comporte l'unité de lavage et de séchage 25. Dans l'unité de lavage et de séchage 25, de l'eau est projetée sur les déchets neutralisés transformés en solides inertes pour ôter l'acide restant. Puis les solides inertes sont séchés pour être traités.

Le dispositif 10 comporte des moyens de traitement 26 ou 27 des déchets neutralisés transformés en solides inertes. Dans des modes de réalisation, la proportion d'amiante déterminée avant immersion des déchets dans l'acide et la composition des déchets orientent les solides inertes obtenus vers différents moyens de traitement 26 ou 27. Par exemple, si la proportion en amiante est inférieure à quarante pourcents pour des déchets de type amiante-ciment, les déchets sont neutralisés pour être transformés en un solide calcique appelé anhydrite utilisable comme additif pour la fabrication des ciments. Selon un autre exemple, si la proportion en amiante est supérieure à soixante-dix pourcents pour un déchet de type calorifugeage ou flocage, le solide inerte obtenu est un solide silicique (très riche en silice) valorisable en zéolites. Dans des modes de réalisation, Les moyens de traitement 26 sont des moyens de collecte du résidu calcique comportant de l'anhydrite. Et les moyens de traitement 27 sont des moyens de synthèse de zéolites.

Dans des modes de réalisation, le dispositif 10 comporte une unité hermétique 12 de tri des déchets comportant :
- une vitre munie de boîtes à gants et
- un convoyeur pour transporter les déchets d'amiante derrière la vitre.

L'unité hermétique 12 de tri fonctionne sous pression négative (en dépression) pour éviter que des fibres d'amiante s'échappent vers le milieu extérieur.

L'unité hermétique 12 de tri précède la cuve 16. Le tri des déchets d'amiante est donc effectué préalablement à l'immersion des déchets dans la cuve 16. A l'issue de l'unité de tri, les déchets ne pouvant être traités dans la cuve 16 sont traités dans une autre cuve 14 de dimensions différentes. Les déchets d'amiante destinés au traitement dans la cuve 14 sont neutralisés mais ne sont pas acheminés vers les moyens de traitement 26 et 27. Les autres déchets sont acheminés vers la cuve 16.

Ainsi, les déchets d'amiante sont neutralisés mais non valorisés. Les déchets orientés vers la cuve 14 sont par exemple des déchets de bois ou les équipements de protection individuelle (masques, les cartouches de masques, les gants, les combinaisons et les vêtements contaminés). Ainsi on ne contamine pas le processus de valorisation par des éléments indésirables.

Dans des modes de réalisation préférentiels, le dispositif 10 comporte des moyens d'humidification 13 des déchets d'amiante avant immersion dans la cuve 16 d'acide dilué. Les moyens d'humidification 13 sont des arroseurs imprégnant d'eau les déchets dans l'unité hermétique 12. L'humidification permet d'éviter que des poussières dangereuses, notamment des fibres d'amiante, restent en suspension dans l'air. Cette eau de lavage est récupérée et préférentiellement utilisée pour diluer l'acide, ce qui évite des rejets d'eau polluée par les fibres d'amiante et assure la neutralisation de l'amiante contenue dans les poussières récupérées assurant ainsi un processus hygiénique et sécurisé.

Dans des modes de réalisation, le dispositif 10 comporte un poste de broyage 15 de déchets comportant de l'amiante, avant immersion dans la cuve d'acide 16, réduisant la taille des déchets contenant de l'amiante à des dimensions comprises entre un dixième de millimètres et un millimètre. Le poste de broyage 15 est situé entre l'unité hermétique 12 de tri et la cuve d'acide 16. Le poste de broyage 15 comporte au moins un broyeur, au moins un cribleur et/ou au moins un concasseur. Dans des modes de réalisation, le poste de broyage 15 comportant un dispositif de déchiquetage non représenté dans la figure 1.

Dans le mode de réalisation illustré en figure 1, un poste de pesage 30 vient avant le poste de broyage 15, lequel est suivi d'une pompe d'aspiration transférant les déchets broyés vers la cuve 16.

Dans des variantes (non représentés), des moyens de détermination automatiques de la proportion d'amiante sont entre le poste de broyage 15 et la cuve 16 et déterminent la proportion d'amiante dans les déchets broyés.

Le dispositif 10 comporte un capteur d'usure 19 de la solution acide issue de la neutralisation des déchets d'amiante, et une unité de précipitation sélective 29, en fonction de l'usure captée, de la phase liquide de la solution acide, alimentée par l'unité de régénération 22. Préférentiellement, la solution acide est régénérée jusqu'à ce que l'usure captée soit supérieure à une valeur limite prédéterminée. Si l'usure captée est supérieure à une valeur limite prédéterminée, la solution acide est transférée à l'unité de précipitation sélective qui fait précipiter le magnésium sous forme de sel ou d'oxyde, après séparation des autres ions métalliques non désirables par mise à pH de la solution acide usée à des valeurs situées dans un intervalle de 6,5 à 9, préférentiellement. Le magnésium issu de la réaction dans la cuve est présent dans le précipité et peut être récupéré sous forme de sulfate de magnésium. Préférentiellement, le capteur d'usure est un capteur de pH ou de d'activité ionique (préférentiellement une électrode ionique spécifique). Préférentiellement, l'usure dépend du taux de magnésium dans la solution acide.

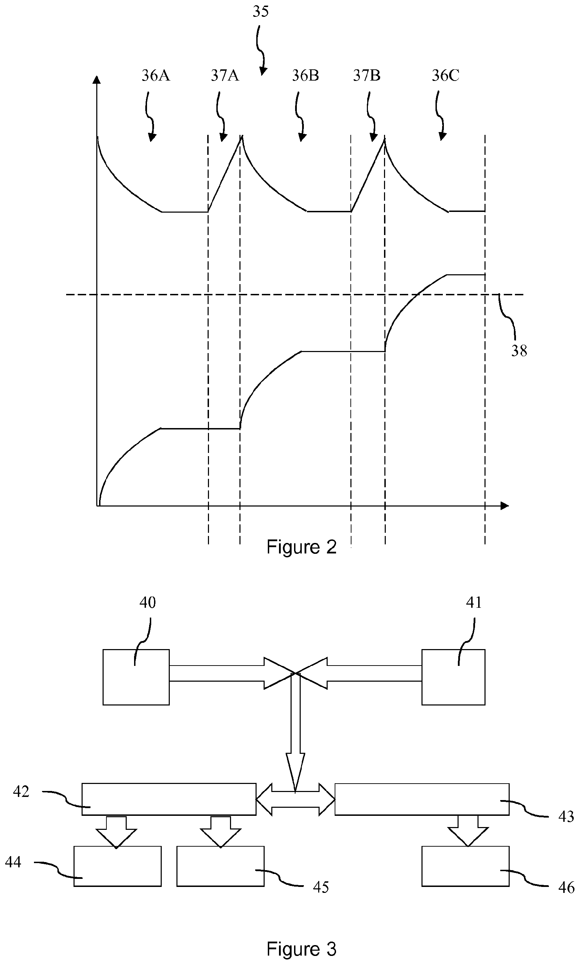

Le cycle 35 de la solution acide initiale est représenté en figure 2. L'abscisse représente le temps et l'ordonnée représente le taux des ions magnésium et le taux d'ions H⁺ dans la solution acide. Les échelles des taux ne sont pas identiques, le taux d'ions H⁺ étant supérieur au taux des ions magnésium.

Au début d'une première phase 36A, la solution acide est introduite et chauffée, dans la cuve 16 et les déchets contenant de l'amiante broyés sont introduits dans la cuve 16. Au cours de la première réaction, phase 36A, le taux des ions magnésium en solution augmente alors que le taux d'ions H⁺ diminue. Au bout d'un certain temps, l'amiante est neutralisé et ces taux n'évoluent plus. Au cours de la régénération de la solution acide, phase 37A, le taux d'ions H⁺ initial est restauré et la concentration en ions magnésium en solution diminue légèrement, du fait de la dilution résultant de l'ajout d'acide.

Les phases 36B et 37B correspondent aux phases 36A et 37A, si ce n'est que la solution acide est initialement chargée en ions magnésium.

La phase 36C correspond à la phase 36B, si ce n'est que la solution acide régénérée pour entamer la phase 36C est initialement doublement chargée en ions magnésium.

Une sonde sous forme d'électrode ionique spécifique au magnésium plongée dans la solution acide estime le taux d'ions magnésium dans la solution (par activité ionique).

Si, à la fin d'une phase de neutralisation le taux des ions magnésium dépasse une valeur limite prédéterminée 38, la solution acide n'est plus régénérée mais on procède à la récupération des ions magnésium en les précipitant sous forme de sel ou oxyde après des étapes de séparation des autres ions métalliques non désirables par précipitation sélective. On recycle ainsi la totalité du magnésium en vue de sa valorisation.

Alternativement, on mesure la consommation des ions H⁺, par le biais d'un pH-mètre ou la consommation d'acide nécessaire à la régénération de la solution acide, car cette consommation est représentative de la quantité de magnésium issue de la neutralisation de l'amiante. Lorsque la consommation d'acide totale au cours des régénérations successives de la solution acide atteint une valeur limite prédéterminée, on arrête le cycle et on fait précipiter les ions magnésium. En figure 2, on suppose que, dès la phase 36C la valeur limite prédéterminée est atteinte.

Par exemple, la valeur limite prédéterminée correspond à un intervalle de 12 à 14 grammes de magnésium par litre de solution acide.

En revenant à la figure 1, dans des modes de réalisation, le dispositif 10 comporte des moyens de récupération de l'eau de lavage pour l'utiliser pour la dilution de l'acide dans la cuve 16. L'eau récupérée est fournie à l'unité de régénération 22.

Dans des modes de réalisation, notamment pour unité maritime, le dispositif 10 comporte des moyens de dessalement 28 d'eau de mer pour fournir de l'eau servant à asperger les déchets d'amiante dans l'unité de tri, à réaliser la solution aqueuse d'acide dilué, ou le lavage des solides inertes après neutralisation. Les moyens de dessalement 28 alimentent préférentiellement aussi en eau les moyens de régénération 22 et l'unité de tri des déchets 12.

Préférentiellement, le dispositif 10 comporte une unité de pilotage 11 commandant les valeurs des différents paramètres de fonctionnement du dispositif 10, tels que :
- la vitesse de rotation de l'agitateur,
- le déclenchement et l'arrêt du poste de broyage 15 en fonction de la masse des déchets déjà entrés dans la cuve de réaction 16,
- l'insertion des déchets dans la cuve 16,
- la mise en fonctionnement et l'arrêt des moyens de chauffage 20, des moyens d'humidification 13, de lavage et de séchage 25 et de dessalement d'eau 28,
- la quantité d'eau ou d'acide à ajouter à la solution acide pour la régénération de la solution acide, en fonction du potentiel hydrogène capté par le pH-mètre 24 et
- le déclenchement de la précipitation de la solution acide en fonction de l'usure mesurée de la solution acide, par exemple.

L'unité de pilotage 11 prend en compte les données des différents capteurs, tels le potentiel hydrogène du pH-mètre 24, l'usure de la solution acide mesurée par le capteur d'usure 19, la température de la solution acide, la masse de déchets introduits, la masse de déchets filtrée, par exemple.

L'unité de pilotage 11 assure également la traçabilité des déchets d'amiante admis dans l'unité de traitement.

L'unité de pilotage 11 permet la création d'une banque de données référence où sont répertoriés les déchets traités dans les unités de neutralisation par exemple selon :
- la typologie des déchets
- la nature des déchets
- la provenance des déchets (chantier)
- la composition
- la nature de l'amiante contenu dans ces déchets
- etc...

L'unité de traitement utilise une approche neutralisation des déchets d'amiante (quelle que soit leur typologie) dans des délais réduits (moins de 24 heures dans tous les cas) en les immergeant dans une solution d'acide à des températures inférieures à la température d'ébullition de la solution acide, par exemple 104 °C, préférentiellement inférieurs à 100°C, préférentiellement supérieures à 70 °C et, encore plus préférentiellement, supérieures à 80 °C.

L'acide utilisé est de façon préférentielle l'acide sulfurique, qui a montré le meilleur résultat de neutralisation sur les déchets d'amiante.

La variété d'amiante la plus exploitée étant le chrysotile (plus de 95%), sa structure cristallographique se présente sous forme d'un empilement de feuillets de silicates (structure tridymite) et de feuillets de brucite Mg(OH)₂.

Lors de sa réaction avec l'acide, l'acide réagit avec les groupements hydroxyles (OH)⁻des feuillets de brucite Mg(OH)₂ ce qui entraîne leur disparition (dissolution du Mg) et donc l'amorphisation de la structure de l'amiante qui se transforme en un solide inerte constitué majoritairement de silice amorphe. Le magnésium passe, de son côté, dans la fraction liquide, et sera récupéré sous forme d'un sel ou d'un oxyde, préférentiellement sous forme de sulfate de magnésium ou d'oxyde de magnésium.

On observe sur la figure 3, le procédé objet de présente invention qui consiste à faire réagir de l'acide 40 avec des déchets d'amiante 41, pour produire une phase solide inerte 42 composée majoritairement d'un solide silicique et/ou calcique et une phase liquide comportant essentiellement du magnésium 43, récupérable par exemple sous forme de sel ou d'oxyde. Selon des modes de réalisation, la phase solide silicique et/ou calcique est employée comme matière première pour être valorisée par la synthèse de zéolithes 44 et/ou en anhydrites 45. La phase liquide 43 est traitée pour extraire du magnésium ou un composé du magnésium 46.

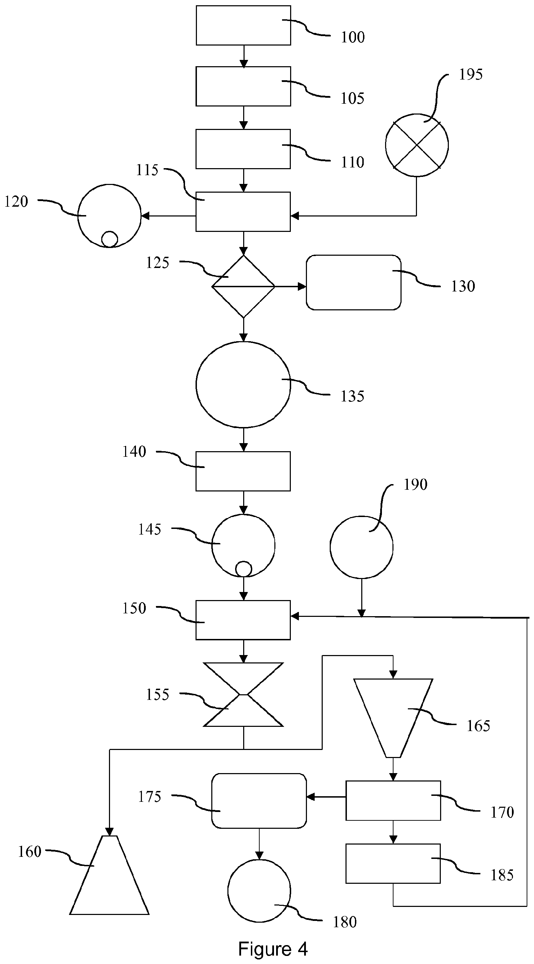

Comme illustré en figure 4, le procédé objet de la présente invention comporte essentiellement les étapes suivantes :
- dilution d'acide et remplissage 145 d'une cuve 16 d'une solution acide diluée qui neutralise les déchets d'amiante,
- immersion de déchets comportant de l'amiante et neutralisation 150 des déchets d'amiante dans la cuve 16,
- filtration 155 pour séparer la phase liquide de la solution acide après neutralisation des déchets d'amiante et des déchets neutralisés transformés en solides inertes,
- régénération 185 de la solution acide, qui ajuste le potentiel hydrogène de la phase liquide extraite après filtration par ajout d'acide contenu dans le réservoir d'acide et
- transfert de la solution régénérée dans la cuve.

Préférentiellement, les étapes du procédé sont contrôlées et commandées par l'unité de pilotage 11. Les étapes du procédé sont mises en oeuvre au moyen d'un dispositif 10 objet de la présente invention.

L'étape de dilution d'acide et de remplissage 145 d'une cuve est effectuée par mélange d'acide contenu dans le réservoir 23 avec de l'eau. L'acide est de l'acide sulfurique, par exemple. L'eau peut être issue d'un réservoir d'eau, d'un recyclage d'eau de lavage de déchets neutralisés solides et/ou de dessalement d'eau.

L'étape d'immersion et l'étape de neutralisation 150 sont mises en œuvre dans la cuve 16 du dispositif 10.

L'étape de filtration 155 est réalisée au moyen d'un filtre de porosité comprise entre 0,4 et 0,5 µm, préférentiellement 0,45 µm. Ce filtre possède une membrane (tamis) résistante à la corrosion de l'acide employé, par exemple une membrane en Polypropylène (PP) ou en Polytétrafluoroéthylène (PTFE, connu sous le nom Téflon, marque déposée). Les solides obtenus après neutralisation des déchets, une fois récupérés au cours de l'étape filtration 155, sont lavés et séchés. Au cours d'une étape de lavage et de séchage (non représentée), de l'eau est projetée sur les déchets neutralisés transformés en solides inertes pour ôter les traces d'acide restant. Puis ces solides silicique et/ou calcique inertes sont séchés pour être valorisés.

Au cours de l'étape de régénération 185, la solution acide filtrée reçoit un ajout d'acide et/ou d'eau pour rendre le potentiel hydrogène égal à la valeur prédéterminée initiale. L'eau peut être issue d'un réservoir d'eau, d'un recyclage d'eau de lavage de déchets neutralisés solides et/ou de dessalement d'eau.

Le procédé objet de la présente invention comporte aussi une étape de mesure de l'usure de la solution acide. La solution acide est régénérée tant que l'usure mesurée est inférieure à une valeur limite prédéterminée et, lorsque l'usure captée est supérieure à la valeur limite prédéterminée, une étape de précipitation 170 des ions magnésium de la phase liquide filtrée est mise en oeuvre.

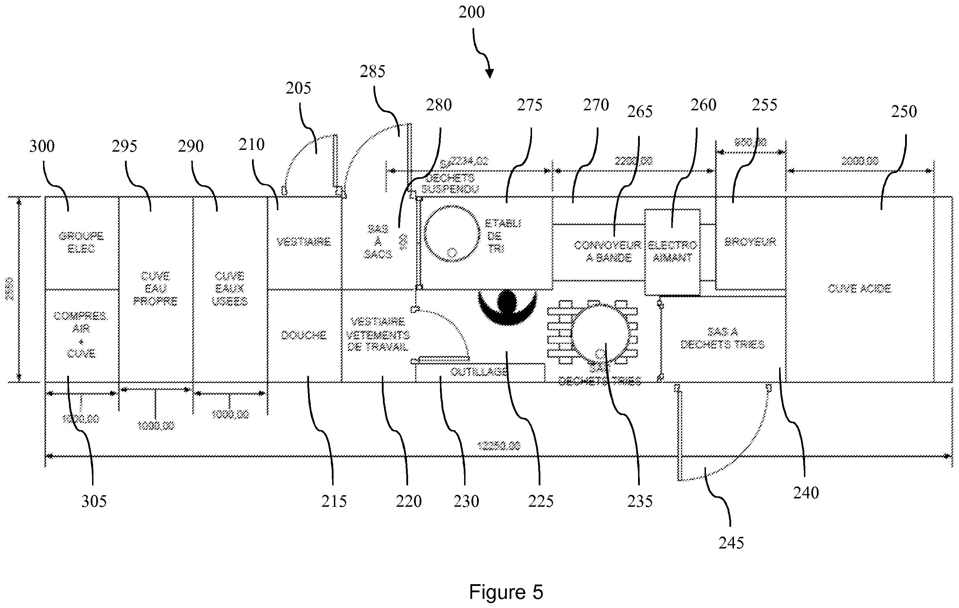

Comme illustré en figure 4, le procédé objet de la présente invention peut comporter, de plus :
- une étape 100 de mise sur ou à proximité du chantier de désamiantage d'une unité mobile de neutralisation, par exemple telle que décrite dans les figures 5 à 9),
- une étape 105 d'arrivée de déchets contenant de l'amiante,
- une étape 110 de pesage des déchets,
- une étape 115 de déballage des déchets et d'aspersion d'eau provenant d'un réservoir 195 pour réduire les risques de volatilité des fibres d'amiante dans l'environnement,
- une étape 120 de traitement et stockage des déchets à neutraliser non valorisables tels que les emballages, du bois et les équipements de protection individuelle (combinaisons et vêtements des opérateurs contaminés par l'amiante), extraits au cours de l'étape de tri 115,
- une étape 125 de tri par détecteur de métaux ferreux et non-ferreux,
- une étape 130 de stockage des déchets stériles ou comportant du métal,
- une étape 135 de stockage des déchets d'amiante triés à neutraliser,
- une étape 140 de broyage des déchets d'amiante à neutraliser,
- une étape 160 d'extraction de la fraction solide (silicique ou calcique) de la solution acide usée, avec une éventuelle valorisation sous forme de zéolithes ou anhydrite,
- une étape 165 d'extraction de la fraction liquide de la cuve contenant l'acide usé,
- une étape 170 de précipitation des composés magnésiens et, éventuellement, de neutralisation d'acide,
- une étape 175 de concentration des composés magnésiens et
- une étape 180 de stockage des composés magnésiens.

On note que la valorisation de la phase solide n'est pas décrite en figure 4.

Dans le cas du dispositif mobile de neutralisation des déchets d'amiante, le domaine de mobilité peut être terrestre ou maritime. Selon un premier domaine de mobilité terrestre, l'unité mobile peut exister en deux versions, une version « camion » et une version « container ». L'unité mobile dans son domaine de mobilité maritime est matérialisée par un navire-usine (navire aménagé en usine de traitement des déchets d'amiante) capable de transporter, entre autres, les unités mobiles terrestres. A cet effet, l'unité mobile de neutralisation associée à la présente invention, quel que soit sa version et son domaine de mobilité, comporte :
- un module de tri de déchets d'amiante,
- un module de concassage/broyage/déchiquetage des déchets d'amiante et
- un bain d'acide chaud pour rendre l'amiante inerte un réacteur sous forme d'une cuve d'acide chauffée permettant le déroulement de la réaction de neutralisation des déchets d'amiante.

La mobilité de cette technologie permet en plus d'apporter une solution de proximité à la problématique des déchets d'amiante qui consiste donc à les neutraliser à la source, de réduire les coûts puisqu'on évite le transport et la mise en dépôt spécifique de type installation ISDD des déchets d'amiante. Après mise en oeuvre de cette invention, seuls des déchets d'amiante stabilisés seront transportée. La mise en œuvre de cette invention rendra obsolète les opérations de transport et de mise en dépôt ISDD qui sont soumis à une règlementation rigoureuse et complexe qui rend ces prestations très coûteuses.

L'ensemble est constitué d'une unité de neutralisation et, dans des modes de réalisation :
- d'un container, préférentiellement d'environ douze mètres de long, conforme à la règlementation en vigueur en matière de convois non exceptionnels, qui supporte l'unité de neutralisation tant pendant son transport que pendant son fonctionnement, pouvant être couplé à un container de même dimension ou de dimension inférieure conforme à la règlementation et pouvant contenir notamment les divers modules de l'unité de traitement,
- d'un camion entrainant une remorque assurant les mêmes fonctions,
- d'un « navire-usine » (bateau aménagé en usine de traitement de déchets d'amiante) permettant le transport des unités mobiles terrestre de neutralisation ou
- d'un support fixe sur chantier.

Hormis le cas des unités mobiles « navire-usine », l'unité mobile de neutralisation tient, de façon avantageuse, dans un container de 40 pieds standard. Ceci permet de charger l'unité mobile de neutralisation sur une remorque, sur un train, un navire, voire même un avion.

Dans des modes de réalisation, l'unité mobile de neutralisation 200 illustrée en figure 5 comporte :
- une porte d'entrée 205 d'opérateurs vers un vestiaire 210,
- une douche 215,
- un vestiaire de vêtements de travail 220,
- un module, ou atelier, de tri 225,
- une cuve amovible de solution acide 250,
- une cellule (sas) d'introduction de sacs de déchets amiantifères 280 munie d'une porte extérieure 285,
- une cuve d'eaux usées 290,
- une cuve d'eau propre 295,
- un groupe électrogène 300 et
- un compresseur d'air 305 muni d'un réservoir d'air comprimé.

Le vestiaire 210, la douche 215 et le vestiaire 220 constituent conjointement une cellule de décontamination pour opérateur.

Le module 225 de tri des déchets comporte :
- un établi de travail 275,
- un convoyeur à bande 265,
- une unité de détection de métaux 260,
- un poste de broyage 255,
- une armoire à outillages 230,
- un récipient pour déchets triés 235 non amiantifères ou amiantifères mais non valorisables et
- un sas 240 d'évacuation du récipient 235 muni d'une porte extérieure 245.

Le module 225, ou atelier, de tri est équipé d'un circuit 270 de circulation d'air, mettant le module 225 en dépression, pour éviter la diffusion de fibres d'amiante en dehors de l'unité mobile de neutralisation par voie aérienne.

L'unité mobile de neutralisation 200 est ainsi confinée.

L'ensemble des déchets d'amiante est humidifié (ajout d'eau claire, non représentée) afin de limiter la mise en suspension de poussières d'une part et de fluidiser la circulation des déchets d'autre part.

Après broyage, les déchets d'amiante sont transférés à travers un circuit étanche (par exemple une pompe d'aspiration étanche non représentée) dans la cuve 250 calorifugée d'acide chaud dilué. Cette cuve 250 est amovible, permettant un remplacement autant que de besoin. Il en est de même des cuves d'eau propre 295 et usées 290.

L'unité mobile de neutralisation 200 est, par ailleurs, équipée d'une baie technique (non représentée) permettant non seulement de faire fonctionner l'ensemble de ses composants dans les conditions de sécurité conformes aux règlementations en vigueur, mais aussi de surveiller/contrôler/piloter/enregistrer l'ensemble de ces paramètres afin d'assurer la traçabilité des déchets admis et de pouvoir répondre à tout moment à un contrôle sanitaire.

En complément des unités mobiles, le système de neutralisation peut comporter au moins une unité fixe, ou usine de neutralisation des déchets d'amiante (non représentée) assurant la finalisation de l'opération de neutralisation préalablement entamée dans l'unité mobile et permettant l'approvisionnement en cuves d'acide préchauffé. Le transfert des cuves d'acide d'une unité mobile de neutralisation à l'unité fixe se traduit donc par l'enchaînement d'actions simples :
- dépôt de la cuve contenant les déchets,
- chargement d'une cuve « neuve » (acide préchauffé),
- vidange de la cuve d'eaux usées ou échange avec une cuve vide,
- remplissage de la cuve d'eau propre ou échange et
- connexion sur le système de pilotage de l'unité mobile de neutralisation pour stockage des données de fonctionnement de l'unité mobile de neutralisation sur une base de données sécurisée fixe au sein de l'usine.

L'unité fixe de neutralisation assurant l'approvisionnement de l'unité mobile de neutralisation comporte :
- un moyen de dépôt d'une cuve de l'unité mobile de neutralisation contenant la solution acide usée,
- un moyen de chargement d'une cuve d'acide préchauffé dans l'unité mobile de neutralisation,
- un moyen de vidange d'une cuve d'eaux usées ou échange d'une cuve d'eau usée avec une cuve vide,
- un moyen de remplissage d'une cuve d'eau propre ou d'échange d'une cuve d'eau propre et
- un moyen de transfert de données de fonctionnement de l'unité mobile de neutralisation depuis l'unité mobile de neutralisation vers une base de données sécurisée de l'unité fixe.

Préférentiellement, l'unité fixe comporte un moyen d'extraction de magnésium d'une fraction liquide issue de la solution acide usée.

Préférentiellement, l'unité fixe comporte aussi un moyen de fabrication de zéolithes et/ou de l'anhydrite à partir d'une fraction solide silicique et/ou calcique issue de la solution acide usée.

Dans des modes de réalisation, l'unité fixe comporte un chauffage à micro-ondes de la solution acide, la cuve à acide étant calorifugée pour conserver la chaleur.

Dans d'autres modes de réalisation, les unités de neutralisation restent à poste sur chantier durant la période des travaux de désamiantage et sont simplement approvisionnées en cuves d'eau propre et d'acide « neuves » et leurs cuves usagées récupérées et transportées à l'usine fixe de traitement sur des camions « standard ».

Le véhicule (non représenté) pour approvisionner une unité mobile de neutralisation comporte :
- un moyen de dépôt d'une cuve de l'unité mobile de neutralisation contenant la solution acide usée,
- un moyen de chargement d'une cuve d'acide préchauffé dans l'unité mobile de neutralisation,
- un moyen de vidange d'une cuve d'eaux usées ou échange d'une cuve d'eau usée avec une cuve vide,
- un moyen de remplissage d'une cuve d'eau propre ou d'échange d'une cuve d'eau propre.

L'unité mobile de neutralisation et le véhicule d'approvisionnement ressemblent extérieurement à des semi-remorques frigorifiques (enceintes closes), à des camions ou à des bateaux de transport connus, opérant selon les normes internationales des transports terrestre et maritime.

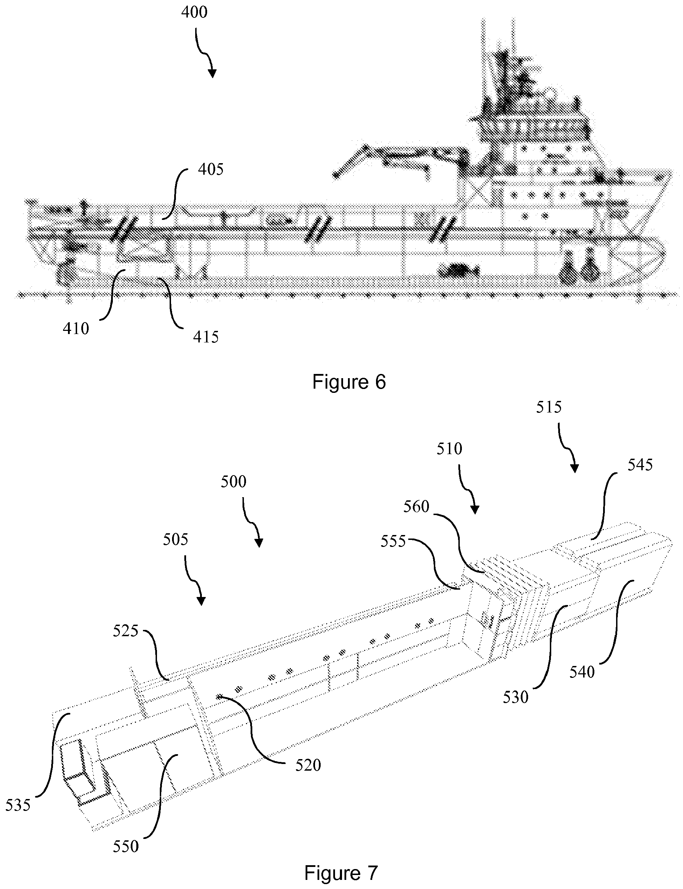

On observe, en figure 6, un « navire-usine » composé d'un bateau de transport 400 (idéalement de type « supply-boat ») transportant au moins une unité de neutralisation 405. Ce bateau 400 comporte un moteur 415 et un groupe électrogène 410 mu par le moteur 415, et un désalinisateur d'eau de mer utilisable (non représenté ici). L'alimentation électrique de chaque unité de neutralisation 405 est réalisée par le groupe électrogène 410.

On note que le bateau 400 peut porter à la fois au moins une unité de neutralisation 405 et des cuves de remplacement de l'acide du réservoir d'eau pure et du réservoir d'eau usée.

Dans des modes d'exploitation de ce système, le bateau peut transporter des matériaux hors gabarit routier (par exemple pièces métalliques découpées de grande dimension).

Dans les modes de réalisation illustrés en figures 7 à 9, les opérateurs travaillent devant une vitre, ils sont en tenue standard ne nécessitant pas d'équipement de protection individuelle spécial « amiante ».

En figure 7, une unité mobile de neutralisation de déchets d'amiante 500 comporte :
- un module de tri 505, par exemple tenant dans un container standard de 40 pieds de long,
- une articulation 510, par exemple à soufflet, et
- un réacteur de traitement 515, par exemple tenant dans un container standard de 20 pieds de long.

Des postes à boîtes à gants 520 séparés par une vitre d'un convoyeur 525 simplifient considérablement les opérations puisque les opérateurs n'ont pas de passage en zone stérile (habillage, douche, déshabillage ...) à effectuer.

L'unité mobile de neutralisation 500 comporte :
- un module, ou atelier, de tri à convoyeur 525,
- une cuve amovible de solution acide 530,
- une cellule (sas) d'introduction de sacs de déchets amiantifères 535 muni d'une porte extérieure (non représentée),
- une cuve d'eaux usées 540,
- une cuve d'eau propre 545,
- un compresseur d'air 550 muni d'un réservoir d'air comprimé,
- une unité de détection de métaux 555,
- un poste de broyage 560,
- un récipient pour déchets triés non amiantifères (non représenté) et
- un sas d'évacuation de déchets non amiantifères (non représenté) muni d'une porte extérieure.

On rappelle ici qu'une boîte à gants est une enceinte étanche qui permet des manipulations dans une atmosphère particulière. Des gants, pour les seules mains et poignes, ou montant jusqu'aux coudes ou aux épaules, fixés à une paroi étanche, permettent d'accéder à l'intérieur sans que le confinement ne cesse. L'utilisateur place ses mains dans les gants et voit alors ses manipulations à travers la paroi transparente.

Ainsi, l'unité mobile de neutralisation n'embarque pas de personnel de tri à l'intérieur de la zone confinée. Le personnel de tri n'est ainsi pas soumis aux contraintes légales de travail en atmosphère dangereuse, et la cellule de décontamination peut être réduite, voire même supprimée.

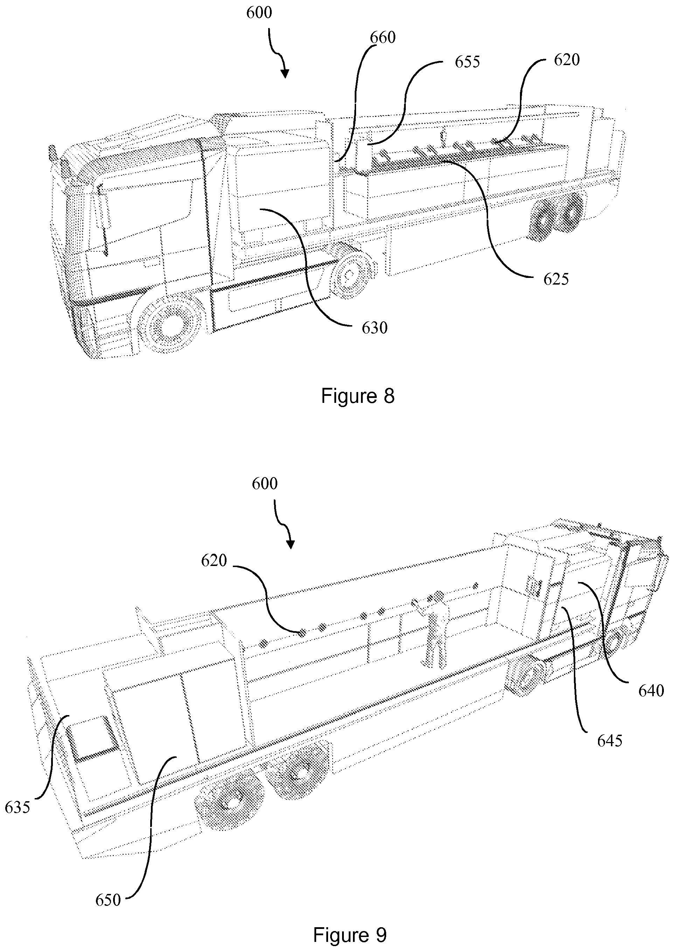

En figures 8 et 9, une unité mobile de neutralisation d'amiante 600 comporte des postes à boîtes à gants 620 séparés par une vitre d'un convoyeur 625 simplifient considérablement les opérations puisque les opérateurs n'ont pas de passage en zone stérile (habillage, douche, déshabillage ...) à effectuer.

L'unité mobile de neutralisation 600 comporte :
- un module, ou atelier, de tri à convoyeur 625,
- une cuve amovible de solution acide 630,
- une cellule 635 (sas) d'introduction de sacs de déchets amiantifères muni d'une porte extérieure (non représentée),
- une cuve d'eaux usées 640,
- une cuve d'eau propre 645,
- un compresseur d'air 650 muni d'un réservoir d'air comprimé,
- une unité de détection de métaux 655,
- un poste de broyage 660,
- un récipient pour déchets triés non amiantifères (non représenté) et
- un sas d'évacuation de déchets non amiantifères (non représenté) muni d'une porte extérieure.

Le fait d'utiliser de l'acide sulfurique au lieu de tout autre acide et notamment de l'acide chlorhydrique a trois avantages :
- c'est l'acide le moins cher et un produit courant, sa production industrielle est élevée (disponibilité en continue auprès des fournisseurs),
- c'est un acide qui en réagissant avec des déchets d'amiante calciques (type amiante-ciment, par exemple) favorise la formation de l'anhydrite, un additif primordial pour la fabrication des ciments et
- c'est un acide dont l'effet sur les fibres d'amiante est bien reconnu puisqu'il présente le meilleur résultat de neutralisation comparé à un autre acide minéral ou organique.

La phase liquide obtenue après attaque acide comporte le magnésium valorisable en un sel ou oxyde de magnésium, très utile dans de nombreuses industries, par exemple pour entrer dans la composition notamment d'engrais agricole.

On donne, ci-après une description de voies de valorisation possibles offertes au solide inerte obtenu suite à l'attaque à l'acide chaud.

A la suite du traitement acide à chaud, le solide inerte obtenu est susceptible de convenir à différentes voies de valorisation selon la nature du déchet initial duquel il est issu.

En effet, les déchets contenant de l'amiante libre, tels que les cordons tressés, ont des taux d'amiante très élevés et permettent, suite à l'attaque acide à chaud, d'obtenir majoritairement la silice (SiO₂) en quantité importante conduisant ainsi la fabrication des zéolithes.

Les déchets contenant de l'amiante lié (10 à 20 % d'amiante), tels que les tôles ondulées en fibrociment, ont approximativement une composition chimique en oxyde de calcium (la chaux (CaO) et en silice (SiO₂) de 40 % et 19 % respectivement. Cette composition est très proche de celle des ciments Portland (marque déposée). L'attaque de ces matériaux par l'acide sulfurique à chaud permet d'avoir majoritairement du sulfate de calcium CaSO₄ appelé aussi Anhydrite. Ce composé se forme en proportion dominante en mélange notamment avec de la silice. L'anhydrite est un additif essentiel dans la chaîne de fabrication du ciment.

On souligne ici l'importance du rôle de l'acide sulfurique comme espèce déterminante pour l'obtention de l'anhydrite car l'usage d'autres acides tels que l'acide chlorhydrique ne permet pas d'avoir le même résultat.

Dans certains cas, l'attaque acide sur le déchet de départ conduit à la formation d'un solide inerte comportant des mésopores (répartition approximative des diamètres des pores : 75 % de macro et de mésopores de diamètre supérieur à 20 Å et 25 % de micro pores de diamètre inférieur à 20 Å, et génère une augmentation de l'aire de sa surface spécifique BET. Plus généralement, la présente invention permet la production de produits présentant des mésopores dont au moins 10 % présentent un diamètre inférieur à 20 Å.

Ces caractéristiques (structure macro et mésoporeuse associée à la morphologie fibreuse non dangereuse) donnent au solide inerte des propriétés mécaniques remarquables, par exemple permettant l'absorption et/ou le brouillage d'une onde de choc, par exemple pour des matériaux énergétiques (fabricants d'explosifs) et l'isolation acoustique par des barrières d'atténuation.

D'autres applications sont envisagées pour le solide intermédiaire inerte, par exemple dans le domaine de la filtration des eaux, applications dans lesquelles la distribution granulométrique pourrait fournir de bons supports bactériens.

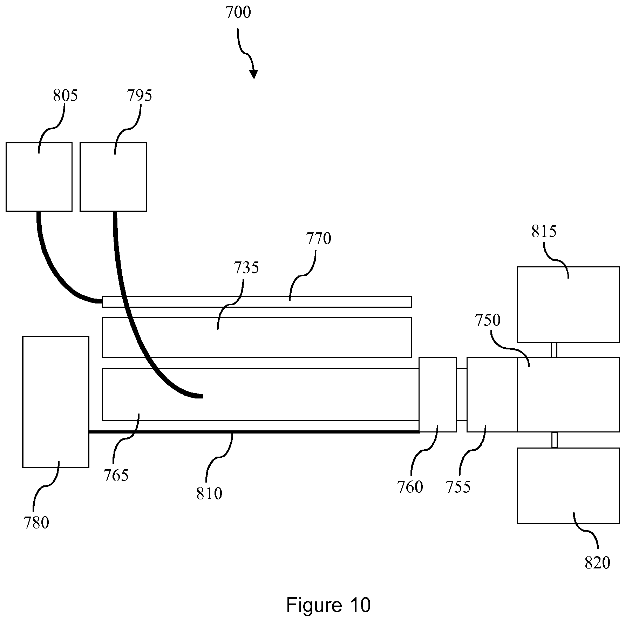

On observe, en figure 10, une unité fixe 700 de neutralisation de déchets d'amiante. Cette unité fixe 700 comporte :
- une cuve de solution acide 750,
- une cellule (sas) d'introduction de sacs de déchets amiantifères 780,
- une cuve d'eau propre 795 et
- un compresseur d'air 805 muni d'un réservoir d'air comprimé.

Un module de tri des déchets comporte :
- un convoyeur à bande 765,
- une unité de détection de métaux 760,
- un poste de broyage 755,
- un récipient pour déchets triés 735 non amiantifères ou amiantifères mais non valorisables.

Le module de tri est équipé d'un circuit 770 de circulation d'air, mettant le module de tri en dépression, pour interdire la diffusion de fibres d'amiante en dehors de l'unité mobile de neutralisation par voie aérienne L'unité mobile de neutralisation 700 est ainsi confinée.

L'ensemble des déchets d'amiante est humidifié avec ajout d'eau claire provenant de la cuve d'eau propre 795, afin de limiter la mise en suspension de poussières d'une part et de fluidiser la circulation des déchets d'autre part.

Après broyage, les déchets d'amiante sont transférés à travers un circuit étanche (par exemple une pompe d'aspiration étanche non représentée) dans la cuve 750 calorifugée d'acide chaud pour destruction. Cette cuve est amovible, permettant un remplacement autant que de besoin. Il en est de même des cuves d'eau propre et usées.

L'unité mobile de neutralisation 700 est, par ailleurs, équipée d'une baie technique (non représentée) permettant non seulement de faire fonctionner l'ensemble de ses composants dans les conditions de sécurité conformes aux règlementations en vigueur, mais aussi de surveiller/contrôler/piloter/enregistrer l'ensemble des valeurs des paramètres de fonctionnement afin d'assurer la traçabilité des déchets admis et de pouvoir répondre à tout moment à un contrôle sanitaire.

Dans le mode de réalisation illustré en figure 10, la cuve 750 est reliée à deux unités de filtration et de régénération, 815 et 820. Après un cycle N de neutralisation d'un lot de déchets contenant de l'amiante par l'acide, dans la cuve 750, le mélange réactionnel comportant le solide et le liquide est transféré dans l'une des deux unités de filtration et de régénération, par exemple l'unité 815. Une fois que la cuve 750 est vide, une solution d'acide neuve ou régénérée provenant de l'unité de filtration et de régénération 820 est introduite dans la cuve 750 en préparation du lancement d'un nouveau cycle de neutralisation N+1. Les déchets d'amiante issus du poste de broyage sont alors transférés dans la cuve 750 contenant la nouvelle solution acide en attente et un nouveau cycle de neutralisation N+1 démarre. Pendant le déroulement du cycle de neutralisation N+1, l'unité de filtration et de régénération 815 procède à la filtration de la solution acide, issue du cycle de neutralisation précédent (cycle N), qu'elle a reçu, et à la régénération de cette solution acide pour un nouveau cycle de neutralisation N+2. Puis le rôle des deux unités de filtration et de régénération est inversé.

Dans des variantes, plusieurs cuves 750 sont utilisées et interverties après chaque fin d'étape de neutralisation des déchets d'amiante par la solution acide dilué.

On obtient ainsi la continuité de la production.

## Revendications

1. Dispositif (10) de neutralisation des déchets d'amiante, qui comporte :
- un réservoir (23) d'acide,
- une cuve (16) contenant une solution d'acide dilué, dans laquelle sont plongés des déchets comportant de l'amiante, cette solution acide neutralisant les déchets d'amiante,
- une unité de filtration (21) pour séparer à l'issue de la réaction de neutralisation des déchets le solide inerte de la phase liquide de la solution acide,
- une unité de régénération (22) de la phase liquide de la solution acide contenue dans la cuve qui ajuste le potentiel hydrogène de la phase liquide filtrée par ajout d'acide concentré contenu dans le réservoir d'acide,
- des moyens de transfert de la phase liquide de la solution acide régénérée dans la cuve,
**caractérisé en ce qu'**il comporte, de plus :
- des moyens de détermination d'un type et/ou d'une proportion d'amiante dans les déchets avant immersion dans la cuve (16), l'unité de régénération (22) ajustant le potentiel hydrogène de la phase liquide de la solution acide régénérée en fonction du type et/ou de la proportion d'amiante et
- un capteur d'usure (19) de la solution acide de neutralisation des déchets d'amiante, et une unité de précipitation sélective (29), en fonction de l'usure captée, de la phase liquide de la solution acide, alimentée par l'unité de régénération (22).

2. Dispositif (10) selon la revendication 1, qui comporte des moyens de traitement (26, 27) des déchets neutralisés transformés en solides inertes en fonction de la proportion d'amiante déterminée.

3. Dispositif (10) selon l'une des revendications 1 ou 2, qui comporte un poste de broyage (15) de déchets d'amiante, avant immersion dans la cuve d'acide (16), réduisant la taille des déchets à des dimensions comprises entre un dixième de millimètres et un millimètre.

4. Dispositif (10) selon l'une des revendications 1 à 3, dans lequel le capteur d'usure (19) est une sonde sous forme d'électrode ionique spécifique.

5. Dispositif (10) selon la revendication 4, dans lequel l'électrode ionique spécifique mesure du taux de magnésium dans la solution acide.

6. Dispositif (10) selon l'une des revendications 1 à 5, dans lequel l'unité de filtration (21) comporte un filtre de porosité inférieure à 0,5 µm.

7. Dispositif (10) selon l'une des revendications 1 à 6, qui comporte un circuit fermé extérieur relié à la cuve (16), disposant de moyens de refroidissement (17) des vapeurs en sortie de cuve.

8. Dispositif (10) selon l'une des revendications 1 à 7, qui comporte des moyens d'humidification (13) des déchets avant immersion dans la cuve (16) d'acide dilué.

9. Dispositif (10) selon l'une des revendications 1 à 8, qui comporte des moyens de dessalement d'eau (28) avant dilution de l'acide dans la cuve (16) par l'eau dessalée.

10. Dispositif (10) selon l'une des revendications 1 à 9, qui comporte une unité de lavage et de séchage (25) des déchets neutralisés transformés en solides inertes et des moyens de récupération de l'eau de lavage pour préparation de la solution acide.

11. Dispositif (10) selon l'une des revendications 1 à 10, qui comporte des moyens de chauffage (20) de la solution acide par micro-ondes.

12. Dispositif (10) selon l'une des revendications 1 à 11, qui comporte une unité de tri des déchets d'amiante (12) confinée comportant :
- un vitre munie de boîtes à gants et
- un convoyeur pour transporter les déchets d'amiante derrière la vitre.

13. Dispositif (10) selon l'une des revendications 1 à 12, dans lequel la cuve (16) comporte au moins un système d'agitation.

14. Procédé de neutralisation de déchets d'amiante, qui comporte les étapes suivantes :
- dilution d'acide et remplissage (145) d'une cuve (16) d'une solution acide diluée,
- immersion de déchets comportant de l'amiante,
- neutralisation (150) des déchets d'amiante dans la cuve par la solution acide diluée,
- filtration (155) pour séparer la phase liquide après neutralisation des déchets d'amiante,
- régénération (185) de la phase liquide de la solution acide, qui ajuste le potentiel hydrogène de la phase liquide filtrée extraite par ajout d'acide contenu dans le réservoir d'acide et
- transfert de la phase liquide de la solution acide régénérée dans la cuve.
**caractérisé en ce qu'**il comporte, de plus,
- une étape de détermination d'un type et/ou d'une proportion d'amiante dans les déchets avant immersion dans la cuve (16), l'étape de régénération (22) comportant un ajustement du potentiel hydrogène de la phase liquide de la solution acide régénérée en fonction du type et/ou de la proportion d'amiante et
- une étape de mesure de l'usure de la solution acide et une étape de précipitation sélective (29), en fonction de l'usure captée, de la phase liquide de la solution acide.

15. Procédé selon la revendication 14 dans lequel, dans l'étape de mesure de l'usure de la solution acide, la solution acide est régénérée (185) tant que l'usure mesurée est inférieure à une valeur limite prédéterminée et, lorsque l'usure mesurée est supérieure à la valeur limite prédéterminée, une étape (170) d'extraction des sous-produits de la phase liquide par précipitation sélective de la solution acide.

## Patentansprüche

1. Vorrichtung (10) zur Neutralisierung von Asbestabfällen, die Folgendes umfasst:
- einen Säurebehälter (23),
- einen Behälter (16) mit einer verdünnten Säurelösung, in den Asbestabfälle eingetaucht werden, wobei diese Säurelösung die Asbestabfälle neutralisiert,
- eine Filtereinheit (21) zur Abtrennung des inerten Feststoffs aus der flüssigen Phase der Säurelösung am Ende der Abfallneutralisierungsreaktion,
- eine Regenerationseinheit (22) für die flüssige Phase der im Behälter enthaltenen Säurelösung, die das Wasserstoffpotenzial der gefilterten flüssigen Phase durch Zugabe von konzentrierter Säure, die im Säurebehälter enthalten ist, anpasst,
- Mittel zur Überführung der flüssigen Phase der regenerierten Säurelösung in den Behälter,
**dadurch gekennzeichnet, dass** sie darüber hinaus Folgendes umfasst:
- Mittel zur Bestimmung eines Asbesttyps und/oder eines Asbestanteils im Abfall vor dem Eintauchen in den Behälter (16), wobei die Regenerationseinheit (22) das Wasserstoffpotenzial der flüssigen Phase der regenerierten Säurelösung je nach Asbesttyp und/oder Asbestanteil anpasst, und
- einen Verschleißsensor (19) für die Säurelösung zur Neutralisierung von Asbestabfällen und eine Einheit zur selektiven Fällung (29), in Abhängigkeit von dem erfassten Verschleiß, der flüssigen Phase der Säurelösung, die von der Regenerationseinheit (22) zugeführt wird.

2. Vorrichtung (10) nach Anspruch 1, die Mittel zur Behandlung (26, 27) der neutralisierten Abfälle umfasst, die in Abhängigkeit von dem ermittelten Asbestanteil in inerte Feststoffe umgewandelt werden.

3. Vorrichtung (10) nach einem der Ansprüche 1 oder 2, die eine Station zum Zerkleinern (15) von Asbestabfällen vor dem Eintauchen in den Säurebehälter (16) umfasst, die die Größe der Abfälle auf Abmessungen zwischen einem Zehntel Millimeter und einem Millimeter reduziert.

4. Vorrichtung (10) nach einem der Ansprüche 1 bis 3, wobei der Verschleißsensor (19) eine Sonde in Form einer spezifischen lonenelektrode ist.

5. Vorrichtung (10) nach Anspruch 4, wobei die spezifische lonenelektrode den Magnesiumgehalt in der Säurelösung misst.

6. Vorrichtung (10) nach einem der Ansprüche 1 bis 5, wobei die Filtereinheit (21) einen Filter mit einer Porosität von weniger als 0,5 µm umfasst.

7. Vorrichtung (10) nach einem der Ansprüche 1 bis 6, die einen mit dem Behälter (16) verbundenen äußeren geschlossenen Kreislauf umfasst, der über Kühlvorrichtungen (17) für die Dämpfe am Behälterauslass verfügt.

8. Vorrichtung (10) nach einem der Ansprüche 1 bis 7, die Mittel zur Befeuchtung (13) der Abfälle vor dem Eintauchen in den Behälter (16) mit verdünnter Säure umfasst.

9. Vorrichtung (10) nach einem der Ansprüche 1 bis 8, die Mittel zur Entsalzung von Wasser (28) vor der Verdünnung der Säure im Behälter (16) durch das entsalzte Wasser umfasst.

10. Vorrichtung (10) nach einem der Ansprüche 1 bis 9, die eine Einheit zum Waschen und Trocknen (25) der neutralisierten Abfälle, die in inerte Feststoffe umgewandelt wurden, und Vorrichtungen zur Rückgewinnung des Waschwassers zur Herstellung der Säurelösung umfasst.

11. Vorrichtung (10) nach einem der Ansprüche 1 bis 10, die Mittel zum Erhitzen (20) der Säurelösung durch Mikrowellen umfasst.

12. Vorrichtung (10) nach einem der Ansprüche 1 bis 11, die eine eingeschlossene Sortiereinheit für Asbestabfälle (12) umfasst, die Folgendes umfasst:
- eine Scheibe, die mit Handschuhfächern versehen ist, und
- ein Förderband für den Transport des Asbestabfalls hinter der Scheibe.

13. Vorrichtung (10) nach einem der Ansprüche 1 bis 12, wobei der Behälter (16) wenigstens ein Rührsystem umfasst.

14. Verfahren zur Neutralisierung von Asbestabfällen, das die folgenden Schritte umfasst:
- Verdünnung der Säure und Befüllen (145) eines Behälters (16) mit verdünnter Säurelösung,
- Eintauchen von Asbestabfällen,
- Neutralisierung (150) von Asbestabfällen im Behälter durch die verdünnte Säurelösung,
- Filtration (155) zur Trennung der flüssigen Phase nach der Neutralisierung der Asbestabfälle,
- Regeneration (185) der flüssigen Phase der Säurelösung, die das Wasserstoffpotenzial der filtrierten flüssigen Phase, die durch Zugabe der im Säurebehälter enthaltenen Säure extrahiert wurde, anpasst, und
- Überführung der flüssigen Phase der regenerierten Säurelösung in den Behälter.
**dadurch gekennzeichnet, dass** es darüber hinaus Folgendes umfasst:
- einen Schritt zur Bestimmung eines Asbesttyps und/oder eines Asbestanteils im Abfall vor dem Eintauchen in den Behälter (16), wobei der Regenerationsschritt (22) eine Anpassung des Wasserstoffpotenzials der flüssigen Phase der regenerierten Säurelösung je nach Asbesttyp und/oder Asbestanteil umfasst, und
- einen Schritt zur Messung des Verschleißes der Säurelösung und einen Schritt zur selektiven Fällung (29), in Abhängigkeit von dem erfassten Verschleiß der flüssigen Phase der Säurelösung.

15. Verfahren nach Anspruch 14, wobei die Säurelösung regeneriert wird (185), solange der gemessene Verschleiß unter einem vorbestimmten Grenzwert liegt, und, wenn der gemessene Verschleiß über dem vorbestimmten Grenzwert liegt, ein Schritt (170) zur Extraktion von Nebenprodukten aus der flüssigen Phase durch selektive Fällung der Säurelösung durchgeführt wird.

## Claims

1. Device (10) for neutralising asbestos waste, that comprises:
- an acid tank (23),
- a tank (16) containing a diluted acid solution in which waste containing asbestos is immersed, this acid solution neutralising the asbestos waste,
- a filtration unit (21) to separate the inert solid from the liquid phase of the acid solution at the end of the waste neutralisation reaction,
- a regeneration unit (22) for the liquid phase of the acid solution contained in the tank that adjusts the hydrogen potential of the filtered liquid phase by the addition of concentrated acid contained in the acid tank,
- means of transferring the liquid phase of the regenerated acid solution into the tank, **characterised in that** it also comprises:
- means for determining a type and/or a proportion of asbestos in the waste before immersion in the tank (16), the regeneration unit (22) adjusting the hydrogen potential of the liquid phase of the regenerated acid solution depending on the type and/or proportion of asbestos and
- a wear sensor (19) for the acid asbestos waste neutralisation solution, and a unit (29) for selective precipitation of the liquid phase of the acid solution supplied by the regeneration unit (22), depending on the detected wear.

2. Device (10) according to claim 1, that comprises means (26, 27) of processing the neutralised waste transformed into inert solids depending on the determined proportion of asbestos.

3. Device (10) according to one of claims 1 or 2, that comprises an asbestos waste grinding station (15), before immersion in the acid tank (16), reducing the size of the waste to dimensions between one tenth of a millimetre and one millimetre.

4. Device (10) according to one of claims 1 to 3, wherein the wear sensor (19) is a probe in the form of a specific ion electrode.

5. Device (10) according to claim 4, wherein the specific ion electrode measures the magnesium content in the acid solution.

6. Device (10) according to one of claims 1 to 5, wherein the filtration unit (21) has a porosity filter smaller than 0.5 µm.

7. Device (10) according to one of claims 1 to 6, that comprises an external closed circuit connected to the tank (16), having means (17) of cooling the vapours at the tank outlet.

8. Device (10) according to one of claims 1 to 7, that comprises means (13) for wetting waste prior to immersion in the diluted acid tank (16).

9. Device (10) according to one of claims 1 to 8, that comprises means (28) of desalination of water before dilution of the acid in the tank (16) by the desalinated water.

10. Device (10) according to one of claims 1 to 9, that comprises a washing and drying unit (25) for the neutralised waste transformed into inert solids and means of recovering the washing water for preparation of the acid solution.

11. Device (10) according to one of claims 1 to 10, that comprises means (20) of heating the acid solution by microwaves.

12. Device (10) according to one of claims 1 to 11, that comprises a confined asbestos waste sorting unit (12) comprising:
- a window fitted with glove boxes and
- a conveyor to transport asbestos waste behind the window.

13. Device (10) according to one of claims 1 to 12, wherein the tank (16) comprises at least one stirring system.

14. Method for neutralisation of asbestos waste, that comprises the following steps:
- acid dilution and filling (145) of a tank (16) with a diluted acid solution,
- immersion of the waste containing asbestos,
- neutralisation (150) of the asbestos waste in the tank by the diluted acid solution,
- filtration (155) to separate the liquid phase after neutralisation of the asbestos waste,
- regeneration (185) of the liquid phase of the acid solution, that adjusts the hydrogen potential of the extracted filtered liquid phase by the addition of acid contained in the acid tank and
- transfer of the liquid phase of the regenerated acid solution into the tank, **characterised in that** it also comprises,
- a step for determining a type and/or a proportion of asbestos in the waste before immersion in the tank (16), the regeneration step (22) comprising an adjustment of the hydrogen potential of the liquid phase of the regenerated acid solution depending on the type and/or proportion of asbestos and
- a step for measuring the wear of the acid solution and a selective step (29) for precipitation of the liquid phase of the acid solution, depending on the detected wear,.

15. Method according to claim 14, wherein the acid solution is regenerated (185) as long as the measured wear is less than a predetermined limiting value, and when the measured wear is more than the predetermined limiting value, a step (170) to extract by-products from the liquid phase by selective precipitation of the acid solution.
